Europäisches Patentamt

European Patent Office

Office européen des brevets

(11) Publication number: **0 204 000**
**B1**

(12) **EUROPEAN PATENT SPECIFICATION**

(45) Date of publication of patent specification: **19.12.90**

(51) Int. Cl.⁵: **A 61 B 8/14**

(21) Application number: **85900204.0**

(22) Date of filing: **26.12.84**

(86) International application number:
**PCT/JP84/00615**

(87) International publication number:
**WO 85/02761 04.07.85 Gazette 85/15**

(54) ULTRASONIC DIAGNOSTIC APPARATUS.

(30) Priority: **27.12.83 JP 247382/83**

(43) Date of publication of application:
**10.12.86 Bulletin 86/50**

(45) Publication of the grant of the patent:
**19.12.90 Bulletin 90/51**

(84) Designated Contracting States:
**DE GB**

(56) References cited:
**EP-A-0 054 638**
**EP-A-0 198 923**
**WO-A-81/01208**
**JP-A-5 516 632**
**JP-A-5 652 047**
**JP-A-56 109 649**
**JP-B-5 830 050**
**US-A-3 813 647**
**US-A-3 818 201**
**US-A-3 857 052**
**US-A-3 959 770**

(73) Proprietor: **YOKOGAWA MEDICAL SYSTEMS, LTD**
**1-3, Sakaecho 6-chome, Tachikawa-shi**
**Tokyo 190 (JP)**

(72) Inventor: **TAKEUCHI, Yasuhito**
**507-8, Yokokawacho, Hachioji-shi**
**Tokyo 193 (JP)**
Inventor: **HIROTA, Yuichi**
**9-15, Gotenyama 2-chome, Masashino-shi**
**Tokyo 184 (JP)**
Inventor: **SANO, Shinichi**
**26-12, Shinmei 4-chome, Hino-shi**
**Tokyo 191 (JP)**
Inventor: **ISHIGURO, Shinichi**
**1-21, Maeharacho 4-chome, Koganei-shi**
**Tokyo 184 (JP)**

(74) Representative: **Henkel, Feiler, Hänzel & Partner**
**Möhlstrasse 37**
**D-8000 München 80 (DE)**

Courier Press, Leamington Spa, England.

## Description

This invention relates to an ultrasound diagnostic imaging equipment with an internal signal checking means.

In an ultrasound diagnostic imaging equipment, it is required to check whether or not each section operates normally through internal signal measurement.

Namely, it is required to check power circuit operation through DC power supply voltage and ripple measurements, and also to check time gain control (TGC) and receive filter time frequency control (TFC) operations through TGC signal and TFC signal measurements, respectively.

So far, the measurement of internal signals in the ultrasound diagnostic device has been performed using various measuring instruments for signal measurements.

Therefore, it was required for the operator to acquire capability for handling various measuring instruments and for evaluating the measured results.

Earlier European application EP-A1-0 198 923 which was published on 29.10.1986 and has the priority date of 16.12.1983 so that its content is prejudicial to the novelty but not to the question of inventive step discloses an ultrasonic diagnostic apparatus which is equipped with a matrix switch inspection means and a test sequencer. Taps on a delay line are changed by the test sequencer in an order from one end of the line in one channel of a matrix switch. Every time the taps are changed from one to another, a testing signal is input to the channel from an ultrasonic probe driving means, and a signal obtained from the output end of the delay line is displayed as a false echo signal on the screen of a display. Thus, it is possible to detect a malfunction in the matrix switch on the basis of the pattern of the false echo image displayed on the screen.

It is an object of the present invention to remove the above mentioned disadvantages and is to provide an ultrasound diagnostic imaging equipment furnished with an internal signal checking means configured in a combined use with signal processing and display means in the ultrasound diagnostic equipment.

To solve this object the present invention provides an ultrasound diagnostic imaging equipment as described in claim 1.

The ultrasonic diagnostic imaging equipment of the present invention comprises video memory means to store received echo signals wherein internal signals are also stored by selectively inputting said internal signals into the video memory means through a multiplexer to check said internal signals stored by displaying them on a image display means of the ultrasound diagnostic imaging equipment as an image or by evaluating them using a processor in said equipment.

This invention can be more fully understood from the following detailed description when taken in conjunction with the accompanying drawing, in which:

Fig. 1 shows a block diagram showing the configuration of an embodiment of this invention; and

Fig. 2 shows a time chart of explaining the operation of the equipment in Fig. 1.

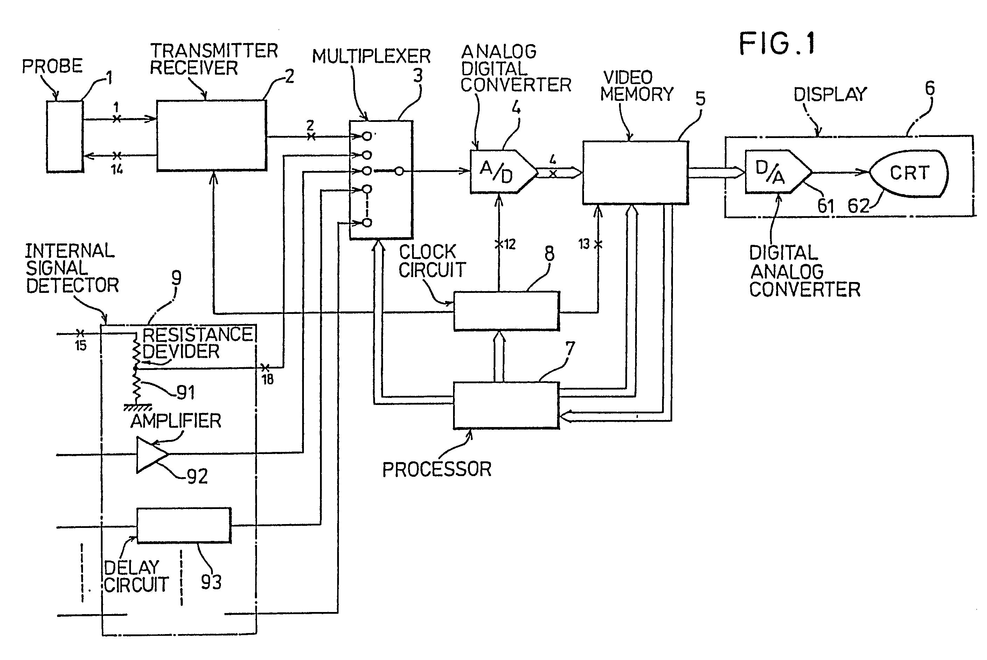

Referring to Fig. 1, the embodiment of this invention consists of an ultrasound probe 1, a transmitter receiver 2, a multiplexer 3, an analog-to-digital converter (hereinafter called A/D converter) 4, a video memory 5, a display 6, a processor (hereinafter called CPU) 7, a clock generator (hereinafter called clock circuit) 8 and an internal signal detector 9.

The transmitter receiver 2 is provided with a transmit circuit and a receive circuit; the display 6 is provided with a digital-to-analog conversion circuit (hereinafter called D/A converter) 61 and an image display tube (hereinafter called CRT) 62; and the internal signal detector 9 is provided with signal conditioners of more than one such as resistance divider(s) 91, amplifier(s) 92 and delay circuit(s) 93. Types and the number of said signal conditioners correspond to types and the number of internal signals. The output of the transmit circuit in the transmitter receiver 2 connects to the ultrasound probe 1; the output of the ultrasound probe 1 connects to the input of the receive circuit in the transmitter receiver 2; and the output of the receive circuit in the transmitter receiver 2 connects to the first data input of the multiplexer 3.

On the other hand, the inputs of more than one of the internal signal detector 9 connect to measured points of generating signals checked in the ultrasound diagnostic equipment. The outputs of more than one of the internal signal detector 9 connect to the respective data inputs of more than one of the multiplexer 3.

The data output of the multiplexer 3 connects to the input of the A/D converter 4; the output of the A/D converter 4 connects to the data input of the video memory 5; the first data output of the video memory 5 connects to the input of the D/A converter 61 in the display 6; and the output of the D/A converter 61 connects to the input of the CRT 62. Further, the second data output of the video memory 5 connects to the input of the CPU 7.

The first output of the clock circuit 8 connects to the clock signal input of the transmitter receiver 2; the second output of the clock circuit 8 connects to the clock signal input of the A/D converter 4; and the third output of the clock circuit 8 connects to the clock signal input of the video memory 5. Further, the first output of the CPU 7 connect to the control signal input of the multiplexer 3; the second signal of the CPU 7 connects to the control signal input of the clock circuit 8; and the third output of the CPU 7 connects to the address signal input of the video memory 5.

A conventional ultrasound diagnostic imaging equipment is in such configuration that the output of the transmitter receiver 2 is directly fed to the A/D converter without the multiplexer 3, internal signal detector 9, the control signal path from the CPU 7 to the multiplexer 3 and the data path from the video memory 5 to the processor 7.

The features of this invention are that the internal signal detector 9 and multiplexer 3 are added to the configuration of the conventional ultrasound diagnostic imaging equipment with the respective connections; the CPU 7 is connected to the video memory 5 via a data bus; and the CPU reads the value stored in the video memory 5 for evaluation.

Following is the description of the operation of the embodiment of this invention.

The embodiment of this invention operates in the normal operation mode and the internal signal check mode. In the normal operation mode, the CRT 62 displays the diagnostic image of a measured body on its screen in accordance with echo signals detected by the ultrasound probe 1.

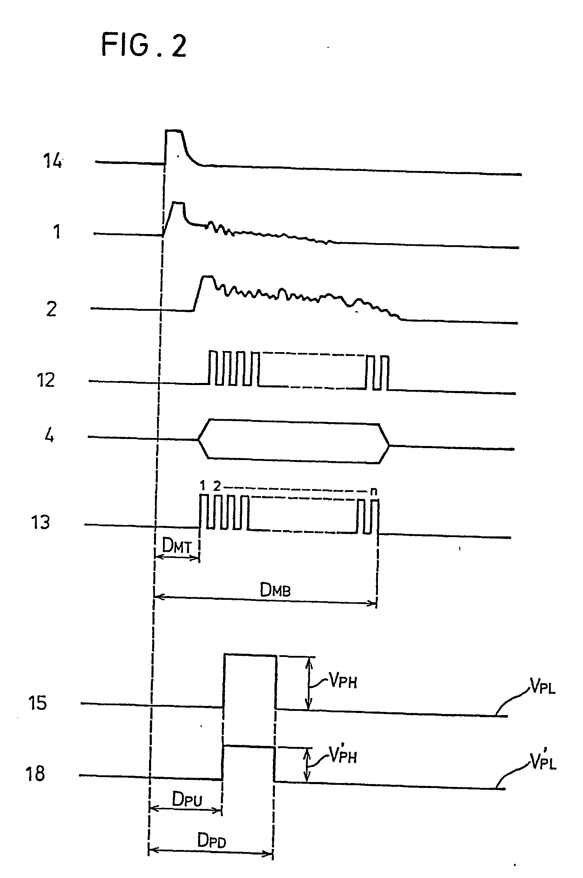

In the internal signal check mode, the internal condition is evaluated or signal display is made on the screen of the CRT 62 by the CPU 7 in accordance with the signal of each section in the ultrasound diagnostic equipment. In the following description, in addition to Fig. 1, Fig 2 showing the timing of one acoustic scanning line of an ultrasound image is used.

Numbers 1, 2, 4, 12, 13, 14, 15 and 18 in Fig. 2 show waveforms at portions marked with X with numbers 1, 2, 4, 13, 14, 15 and 18 in Fig. 1, respectively.

Following is the operational description in the normal operation mode. In this mode, the output of the receive circuit in the transmitter receiver 2 is selected by the multiplexer 3 under the control of the CPU 7. The transmit circuit in the transmitter receiver 2 transmits a pulse signal to drive transducers in the ultrasound probe 1; a receive signal 1 from the ultrasound probe 1 is fed to the receive circuit in the transmitter receiver 2 wherein amplification and delay processing are performed; and said signal is converted to a digital signal by the A/D converter to be written in the video memory 5. Write timing is given by a timing clock 13. Namely, as shown in Fig. 2, assuming that rise of the drive pulse 14 is set to the origin on the time axis, the digital signal 4 existing between the time after the lapse of $D_{MT}$ from the origin and that after the lapse of $D_{MB}$ from the same origin is written in the video memory 5. The drive pulse 14 is output every time each acoustic scanning line is switched and each echo signal corresponding to said pulse is received and processed to be stored in the video memory 5. When the acoustic scanning line has scanned the whole area of a field of probe vision, the video memory 5 stores the image data corresponding to one frame. The read output of the video memory 5 is converted to the analog video signal by the D/A converter to be displayed on the screen of the CRT 62.

Following is the operational description in the internal signal check mode. In this mode, one output signal of the internal signal detector 9 is selected by the multiplexer 3. In the internal signal detector 9, the voltage of a certain signal at each point in the ultrasound diagnostic equipment is divided or amplified by the resistance divider 91 or the amplifier 92 so that it is within the conversion voltage range of the A/D converter 4, while a certain signal, at each point in said equipment is delayed by the delay circuit 93 so that its rise and fall are within the operating cycle of the A/D converter 4.

Even in the internal signal checkmode, the ultrasound diagnostic equipment continues its normal operation. Therefore, the internal signals corresponding to one sequence per acoustic scanning line are output from the internal signal detector 9, and one internal signal selected by the multiplexer 3 is digitized by the A/D converter in the same way as the receive signals corresponding to one acoustic scanning line of the ultrasound probe 1 to be written in the video memory 5. Thus, one internal signal is stored in the video memory 5 by one sequence.

If the multiplexer 3 is switched synchronizing with acoustic scanning line selection, the output signals of more than one are sequentially written in the video memory by those corresponding to one acoustic scanning line. When all of the output signals of the internal signal detector 9 have been written, the CPU 7 stops temporarily its acoustic scan and during this stopped period, each internal signal stored in the video memory 5 is read by the address signal, and is analyzed to evaluate the presence or absence of fault.

Or the waveform corresponding to each internal signal stored in the video memory 5 is displayed on the screen of the CRT 62 to enable the operator to evaluate the presence or absence of the fault in comparison of the displayed waveform with a normal waveform sample.

Or, in the internal signal check mode if the state of one internal signal selected by the multiplexer 3 continues while the acoustic scanning line scans the whole field of vision of said probe, all of the acoustic scanning line in one frame corresponding to the same internal signals are stored in the video memory 5. Thus, the contents of the video memory 5 are converted to the analog video signals by the D/A converter 61 to display them on the screen of the CRT 62. As a result, a striped pattern in light and shade according to internal signal waveforms is so created that the operator can evaluate the presence or absence of fault based on this pattern.

The equipment in this invention, as aforementioned, can check correctness or incorrectness, ripple content and waveform of each power supply voltage, and the output waveforms of the TGC and TFC circuits as examples from among factors exerting a harmful influence upon image creation on an ultrasound diagnostic equipment using built-in measuring and analyzing means, thus unrequiring skilled capability needed when checking is performed with the use of special measuring instruments. Therefore, it is easy for the operator to diagnose the ultrasound diagnostic imaging equipment itself to keep said equipment always in its best condition.

In addition, the equipment in this invention is added with only a small amount of hardware for internal signal checking with the use of ordinary circuits in said equipment to the utmost, thus realizing the ultrasound diagnostic imaging equipment with the internal signal checking means in high cost performance.

## Claims

1. An ultrasound diagnostic imaging equipment comprising:

ultrasound applying means (2) which applies ultrasound signals to a measured body,

receiving and storing means which receives and stores the echo signals from said body in a video memory (5),

display means (6) which displays the signals stored in the video memory (6) on a display device (62) as an image,

an internal signal detector (9) comprising signal conditioners (91, 92, 93) for collecting and conditioning internal circuit signals and

a multiplexer (3) for selecting either the echo signals from the measured body in the normal operation mode or the output signals of said internal signal detector (9) in the internal signal check mode, the output of said multiplexer (3) being connected to the video memory (5) for storing said signals and displaying either an echo signal based image in normal operation mode or a internal signal based image in internal signal check mode on the display device (62) thereby checking whether or not the equipment operates properly.

2. The equipment as claimed in claim 1, characterized in that said video memory (5) comprises a digital video memory and an analog-to-digital converter (4) which converts the output signal of said multiplexer (3) to the digital signal to input it to said video memory (5).

3. The equipment as claimed in claim 2, characterized by a data processing means (2) which reads the output signal of the internal signal detector (9) stored in said video memory (5) to evaluate the presence or absence of fault.

4. The equipment as claimed in claim 2, characterized by a data processing means (2) which reads the output signal of the internal signal detector (9) in said video memory (5) to display it on said display means (6) as an analog waveform signal.

5. The equipment as claimed in claim 1, characterized in that said multiplexer (3) continues the selected state of one output signal of said internal signal detector (9) until the internal signal at least corresponding to one frame of the display screen is stored in said video memory (5).

## Patentansprüche

1. Ultraschalldiagnosevorrichtung mit:

einer Ultraschall-Anlegeeinrichtung (2), die Ultraschallsignale an einen zu messenden Körper anlegt,

einer Empfangs- und Speichereinrichtung, die die Echosignale von dem Körper in einem Video speicher (5) empfängt und speichert,

einer Anzeigeeinrichtung (6), die die im Video speicher (6) gespeicherten Signale auf einer Anzeigeeinheit (62) als ein Bild anzeigt,

einem internen Signaldetektor mit Signalkonditioniereinheiten (91, 92, 93) zum Sammeln und Konditionieren interner Schaltungssignale und

einem Multiplexer (3) zum Wählen entweder der Echosignale von dem gemessenen Körper in der normalen Betriebsart oder der Ausgangssignale des internen Signaldetektors (9) in der internen Signalprüfbetriebsart, wobei der Ausgang des Multiplexers (3) mit dem Videospeicher (5) verbunden ist, um diese Signale zu speichern und entweder ein Echosignal aufgrund eines Bildes in einer normalen Betriebsart oder ein internes Signal aufgrund eines Bildes in einer internen Signalprüfbetriebsart auf der Anzeigeeinheit (62) anzuzeigen, so daß geprüft wird, ob die Vorrichtung richtig arbeitet oder nicht.

2. Vorrichtung nach Anspruch 1, dadurch gekennzeichnet, daß der Videospeicher (5) einen Digitalvideospeicher und einen Analog/Digital-Umsetzer (4), der das Ausgangssignal des Multiplexers (3) in das Digitalsignal umsetzt, um dieses in den Videospeicher (5) einzuspeisen, aufweist.

3. Vorrichtung nach Anspruch 2, gekennzeichnet durch eine Datenverarbeitungseinrichtung (2), die das im Videospeicher (5) gespeicherte Ausgangssignal des internen Signaldetektors (9) ausliest, um Vorhandensein oder Abwesenheit eines Fehlers zu bewerten.

4. Vorrichtung nach Anspruch 2, gekennzeichnet durch eine Datenverarbeitungseinrichtung (2), die das Ausgangssignal des internen Signaldetektors (9) in den Videospeicher (5) liest, um es auf der Anzeigeeinrichtung (6) als ein analoges Wellenformsignal anzuzeigen.

5. Vorrichtung nach Anspruch 1, dadurch gekennzeichnet, daß der Multiplexer (3) den gewählten Zustand von einem Ausgangssignal des internen Signaldetektors (9) fortsetzt, bis das interne Signal wenigstens entsprechend einem Vollbild des Anzeigeschirmes in dem Videospeicher (5) gespeichert ist.

## Revendications

1. Un appareil de création d'image de diagnostic à ultrasons comportant:

des moyens (2) d'application d'ultra-sons qui appliquent des signaux ultra-sonores à un corps mesuré,

des moyens de réception et de mémorisation qui reçoivent et mémorisent dans une mémoire vidéo (5) les signaux d'écho provenant dudit corps,

des moyens d'affichage (6) qui affichent sous la forme d'une image sur un dispositif d'affichage (62) les signaux mémorisés dans la mémoire vidéo (5),

un détecteur (9) de signaux internes comportant des conditionneurs de signaux (91, 92, 93) pour collecter et conditionner les signaux internes de circuit, et

un multiplexeur (3) pour sélectionner soit les signaux d'écho provenant du corps mesuré dans le mode en fonctionnement normal, soit les signaux de sortie dudit détecteur (9) des signaux internes dans le mode de vérification des signaux internes, la sortie dudit multiplexeur (3) étant reliée à la mémoire vidéo (5) pour mémoriser lesdits signaux et afficher soit une image basée sur les signaux d'écho dans le mode en fonctionnement normal, soit une image basée sur les signaux internes dans le mode de vérification des signaux internes sur le dispositif d'affichage (62), de manière à vérifier ainsi si l'appareil fonctionne correctement.

2. L'appareil selon la revendication 1, caractérisé en ce que ladite mémoire vidéo (5) comporte une mémoire vidéo numérique et un convertisseur (4) analogique à numérique qui convertit le signal de sortie dudit multiplexeur (3) en un signal numérique pour le faire entrer dans ladite mémoire vidéo (5).

3. L'appareil selon la revendication 2, caractérisé par des moyens (2) de traitement de données qui lisent le signal de sortie du détecteur (9) de signaux internes mémorisé dans ladite mémoire vidéo (5) pour évaluer la présence ou l'absence de défaut.

4. L'appareil selon la revendication 2, caractérisé par des moyens (2) de traitement de données qui lisent le signal de sortie du détecteur (9) de signaux internes dans ladite mémoire vidéo (5) pour l'afficher sur lesdits moyens d'affichage (6) sous la forme d'un signal d'onde analogique.

5. L'appareil selon la revendication 1, caractérisé en ce que ledit multiplexeur (3) poursuit l'état sélectionné d'un signal de sortie dudit détecteur (9) de signaux internes jusqu'à ce que le signal interne correspondant à au moins une image complète de l'écran d'affichage soit mémorisé dans ladite mémoire vidéo (5).

FIG.1

# FIG . 2